# EUROPEAN PATENT APPLICATION

(11) **EP 4 661 473 A1**
(43) Date of publication of application: **10.12.2025**
(21) Application number: 24749594.8
(22) Date of filing: 25.01.2024
(51) Int. Cl.: H04W 24/08

(54) **SIDELINK LISTEN-BEFORE-TALK PROCESSING METHOD AND APPARATUS, TERMINAL, AND NETWORK SIDE DEVICE**

(30) Priority: 01.02.2023 CN 202310050770
(71) Applicant: Vivo Mobile Communication Co., Ltd., Dongguan, Guangdong 523863 (CN)
(72) Inventor: LI, Jianhui, Dongguan, Guangdong 523863 (CN); XIAO, Xiao, Dongguan, Guangdong 523863 (CN); ZHENG, Qian, Dongguan, Guangdong 523863 (CN); LIANG, Jing, Dongguan, Guangdong 523863 (CN)
(74) Representative: Michalski Hüttermann & Partner Patentanwälte mbB
(86) International application number: PCT/CN2024/073937
(87) International publication number: WO 2024/160113

(57) **Abstract**

This application discloses a sidelink listen-before-talk processing method and apparatus, a terminal, and a network-side device, and pertains to the field of communication technologies. The sidelink listen-before-talk processing method according to an embodiment of this application includes: receiving, by a terminal, configuration information from a network-side device, where the configuration information includes a first timer value and a first count value, both the first timer value and the first count value are associated with a resource unit, and the resource unit includes a resource pool or a resource block set; determining, by the terminal based on the first timer value and the first count value during a listen-before-talk process in a sidelink SL unlicensed band, whether consistent LBT failure occurs on the resource unit.

## Description

### CROSS-REFERENCE TO RELATED APPLICATIONS

This application claims priority to Chinese Patent Application No. 202310050770.6, filed on February 1, 2023, which is incorporated herein by reference in its entirety.

### TECHNICAL FIELD

This application pertains to the field of communication technologies, and specifically relates to a sidelink listen-before-talk processing method and apparatus, a terminal, and a network-side device.

### BACKGROUND

With the development of communication systems, in future communication systems, unlicensed bands (unlicensed band) may serve as a supplement to licensed bands (licensed band) to assist operators in expanding services. In unlicensed bands, a terminal needs to perform a listen-before-talk (Listen Before Talk, LBT) operation. If an LBT failure occurs, the terminal continues to perform LBT operations until LBT succeeds, after which a corresponding transmission behavior is executed. Due to resource contention from terminals of other radio access technologies (Radio Access Technology, RAT) such as Wi-Fi on the unlicensed band of sidelink, the terminal may continuously detect LBT failures, which can lead to reduced reliability of sidelink transmissions. Therefore, in sidelink communication systems, how to detect whether consistent LBT failures occur has become an urgent issue to be addressed.

### SUMMARY

Embodiments of this application provide a sidelink listen-before-talk processing method and apparatus, a terminal, and a network-side device, so as to detect consistent LBT failures in a sidelink communication system.

According to a first aspect, a sidelink listen-before-talk processing method is provided, including:
receiving, by a terminal, configuration information from a network-side device, where the configuration information includes a first timer value and a first count value, both the first timer value and the first count value are associated with a resource unit, and the resource unit includes a resource pool or a resource block set; and
determining, by the terminal based on the first timer value and the first count value during a listen-before-talk process in a sidelink SL unlicensed band, whether consistent LBT failure occurs on the resource unit.

According to a second aspect, a sidelink listen-before-talk processing method is provided, including:
sending, by a network-side device, configuration information to a terminal, where the configuration information includes a first timer value and a first count value, both the first timer value and the first count value are associated with a resource unit, the resource unit includes a resource pool or a resource block set, and the first timer value and the first count value are used by the terminal to determine, during a listen-before-talk process in a sidelink SL unlicensed band, whether consistent LBT failure occurs on the resource unit.

According to a third aspect, a sidelink listen-before-talk processing apparatus is provided, including:
a first receiving module configured to receive configuration information from a network-side device, where the configuration information includes a first timer value and a first count value, both the first timer value and the first count value are associated with a resource unit, and the resource unit includes a resource pool or a resource block set; and
a determining module configured to determine, based on the first timer value and the first count value during a listen-before-talk process in a sidelink SL unlicensed band, whether consistent LBT failure occurs on the resource unit.

According to a fourth aspect, a sidelink listen-before-talk processing apparatus is provided, including:
a second sending module configured to send configuration information to a terminal, where the configuration information includes a first timer value and a first count value, both the first timer value and the first count value are associated with a resource unit, the resource unit includes a resource pool or a resource block set, and the first timer value and the first count value are used by the terminal to determine, during a listen-before-talk process in a sidelink SL unlicensed band, whether consistent LBT failure occurs on the resource unit.

According to a fifth aspect, a terminal is provided. The terminal includes a processor and a memory, where the memory stores a program or an instruction capable of running on the processor, and when the program or instruction is executed by the processor, the steps of the method according to the first aspect are implemented.

According to a sixth aspect, a terminal is provided, including a processor and a communication interface, where the communication interface is configured to receive configuration information from a network-side device, the configuration information including a first timer value and a first count value, both the first timer value and the first count value are associated with a resource unit, and the resource unit includes a resource pool or a resource block set; the processor is configured to determine, based on the first timer value and the first count value during a listen-before-talk process in a sidelink SL unlicensed band, whether consistent LBT failure occurs on the resource unit.

According to a seventh aspect, a network-side device is provided. The network-side device includes a processor and a memory, where the memory stores a program or an instruction capable of running on the processor, and when the program or instruction is executed by the processor, the steps of the method according to the second aspect are implemented.

According to an eighth aspect, a network-side device is provided, including a processor and a communication interface, where the communication interface is configured to send configuration information to a terminal, where the configuration information includes a first timer value and a first count value, both the first timer value and the first count value are associated with a resource unit, the resource unit includes a resource pool or a resource block set, and the first timer value and the first count value are used by the terminal to determine, during a listen-before-talk process in a sidelink SL unlicensed band, whether consistent LBT failure occurs on the resource unit.

According to a ninth aspect, a communication system is provided, including: a terminal and a network-side device, where the terminal is configured to perform the steps of the sidelink listen-before-talk processing method according to the first aspect, and the network-side device is configured to perform the steps of the sidelink listen-before-talk processing method according to the second aspect.

According to a tenth aspect, a readable storage medium is provided, where the readable storage medium stores a program or an instruction, and when the program or instruction is executed by a processor, the steps of the method according to the first aspect or the steps of the method according to the second aspect are implemented.

According to an eleventh aspect, a chip is provided. The chip includes a processor and a communication interface, where the communication interface is coupled to the processor, the processor is configured to run a program or an instruction to implement the steps of the method according to the first aspect or the steps of the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, a terminal receives configuration information from a network-side device, where the configuration information includes a first timer value and a first count value, both the first timer value and the first count value are associated with a resource unit, and the resource unit includes a resource pool or a resource block set; and the terminal determines, based on the first timer value and the first count value during a listen-before-talk process in a sidelink SL unlicensed band, whether consistent LBT failure occurs on the resource unit. In this way, in a sidelink communication system, whether consistent LBT failure occurs is determined at the granularity of a resource pool or a resource block set. Therefore, the embodiments of this application implement the detection of consistent LBT failure in a sidelink communication system.

### BRIEF DESCRIPTION OF DRAWINGS

FIG. 1 is a schematic diagram of a network structure to which an embodiment of this application is applicable;
FIG. 2 is a schematic flowchart of a sidelink listen-before-talk processing method according to an embodiment of this application;
FIG. 3 is a schematic flowchart of another sidelink listen-before-talk processing method according to an embodiment of this application;
FIG. 4 is a schematic structural diagram of a sidelink listen-before-talk processing apparatus according to an embodiment of this application;
FIG. 5 is a schematic structural diagram of another sidelink listen-before-talk processing apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The technical solutions in the embodiments of this application will be clearly described below with reference to the accompanying drawings in the embodiments of this application. Obviously, the described embodiments are some of the embodiments of this application, but not all of them. All other embodiments obtained by a person of ordinary skill in the art based on the embodiments of this application fall within the scope of protection of this application.

The terms "first", "second", and the like in the specification and claims of this application are used to distinguish similar objects and are not used to describe a specific order or sequence. It should be understood that the terms so used are interchangeable under appropriate circumstances, so that the embodiments of this application can be implemented in an order other than those illustrated or described herein, and the objects distinguished by "first" and "second" are usually of one type, without limiting the number of objects, for example, a first object can be one or more. In addition, in the specification and claims, "or" indicates at least one of the connected objects, for example, "A or B" covers three scenarios, namely, scenario 1: including A but not B; scenario 2: including B but not A; scenario 3: including both A and B. The character "/" generally indicates that the associated objects before and after are in an "or" relationship.

The term "indicate" in the specification and claims of this application can be either an explicit indication or an implicit indication. An explicit indication can be understood as the sender clearly informing the receiver of the operation to be performed or the requested result in the sent indication; an implicit indication can be understood as the receiver making a judgment based on the indication sent by the sender and determining the operation to be performed or the requested result based on the judgment result.

It is worth noting that the technology described in the embodiments of this application is not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the described technology can be used for the systems and radio technologies mentioned above, as well as for other systems and radio technologies. The following description describes a new radio (New Radio, NR) system for illustrative purposes, and NR terminology is used in most of the descriptions below, but these technologies can also be applied to applications other than NR system application, such as a 6^{th} generation (6^{th} Generation, 6G) communication system.

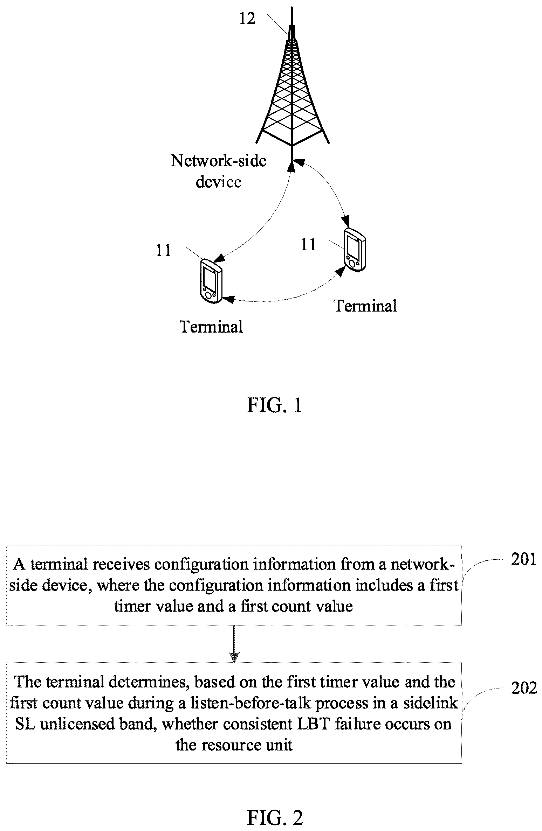

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other suitable terms in the field. Provided that the same technical effect is achieved, the base station is not limited to specific technical terms. It should be noted that in the embodiments of this application, only the base station in the NR system is used as an example, but the specific type of the base station is not limited.

### 1. Concepts related to NR sidelink

Sidelink transmission refers to direct data transmission between terminals (User Equipment, UE) at the physical layer. LTE sidelink is based on broadcast communication and can support basic safety-related communication for vehicle-to-everything (vehicle to everything, V2X), but it is not suitable for other more advanced V2X services. The 5G NR system supports more advanced sidelink transmission designs, such as unicast, multicast, or groupcast, enabling support for a wider range of service types.

NR sidelink includes the following channels:
physical sidelink control channel (Physical Sidelink Control Channel, PSCCH);
physical sidelink shared channel (Physical Sidelink Shared Channel, PSSCH);
physical sidelink broadcast channel (Physical Sidelink Broadcast Channel, PSBCH); and
physical sidelink feedback channel (Physical Sidelink Feedback Channel, PSFCH).

### 2. NR sidelink resource structure

Due to operation in unlicensed bands, the designs of NR unlicensed (New Radio Unlicensed, NR-U) and sidelink unlicensed (Sidelink Unlicensed, SL-U) both support resource structure based on a sub-band. A sub-band refers to a portion of the entire bandwidth corresponding to a specific carrier in the unlicensed band. In NR-U and SL-U, a sub-band is referred to as a resource block set (Resource block set, RB set), which corresponds to one set of "time-frequency" resources. Specially, for SL-U, one resource pool (Resource Pool, RP) may include (resources corresponding to) one or more RB sets.

### 3. LBT

In future communication systems, unlicensed bands (unlicensed band) may serve as a supplement to licensed bands (licensed band) to assist operators in expanding services. To maintain consistency with NR deployments and maximize NR-based unlicensed access, unlicensed bands can operate in 5 GHz, 37 GHz, and 60 GHz bands. The large bandwidth (80 MHz or 100 MHz) of unlicensed bands can reduce the implementation complexity of base stations and UEs. Since unlicensed bands are shared by multiple radio access technologies (Radio Access Technology, RAT), such as Wi-Fi, radar, and LTE licensed-assisted access (LTE Licensed-assisted Access, LTE-LAA), in some countries or regions, unlicensed bands need to comply with regulations (regulation), such as LBT and maximum channel occupancy time (maximum channel occupancy time, MCOT), to ensure fair use of resources by all devices. When a transmission node needs to send information, it is required to perform LBT first, performing power detection (energy detection, ED) on surrounding nodes. If the detected power is lower than a threshold, the channel is considered idle (idle), and the transmission node can send the information. Otherwise, the channel is considered busy, and the transmission node cannot send the information. The transmission node may be a base station, a UE, a Wi-Fi AP, or the like. Upon the transmission node starts transmission, the channel occupancy time (channel occupancy time, COT) cannot exceed the MCOT. Additionally, according to the occupied channel bandwidth (OCB, occupied channel bandwidth) regulation, in unlicensed bands, the transmission node needs to occupy at least 70% (for 60 GHz) or 80% (for 5 GHz) of the entire band for each transmission.

The LBT types (type) commonly used in NR-U can be divided into Type 1, Type 2A, Type 2B, and Type 2C. Type 1 LBT is a back-off (back-off)-based channel sensing mechanism, when the transmission node detects that the channel is busy, it performs a back-off and continues sensing until the channel is detected as idle. In Type 2C, the transmission node does not perform LBT, that is, no LBT (no LBT) or perform immediate transmission (immediate transmission). Type 2A LBT and Type 2B LBT are one-shot (one-shot) LBTs, where the node performs LBT once before transmission; and if the channel is idle, it performs transmission, or if the channel is busy, it does not perform transmission. The difference is as follows: For Type 2A, LBT is performed within 25 µs, applicable when a gap between two transmissions during shared COT is greater than or equal to 25 µs; for Type 2B, LBT is performed within 16 µs, applicable when a gap between two transmissions during shared COT is equal to 16 µs. Additionally, there is Type 2 LBT, applicable to LAA, enhanced LAA (Enhanced LAA, eLAA), and further enhancement LAA (Further Enhancement LAA, FeLAA). When a gap between two transmissions during shared COT is greater than or equal to 25 µs, the eNB and the UE can use Type 2 LBT. Furthermore, in frequency range (frequency range) 2-2, LBT types include Type 1, Type 2, and Type 3. Type 1 is a back-off-based channel sensing mechanism; Type 2 is one-shot LBT, performing 5 µs LBT within 8 µs; and Type 3 is no LBT.

### 4. LBT failure detection and consistent LBT failure detection/handling

NR-U supports the RB set structure in unlicensed bands. Further, LBT operations in NR-U are performed independently on each RB set (Resource block set). In each cell (that is, one carrier) in NR-U, the network-side device configures one or more bandwidth parts (bandwidth part, BWP) for the UE, where each BWP includes a portion of the frequency domain resources of the cell bandwidth, and each BWP may include one or more RB sets. Also, the network activates one BWP for the UE and schedules uplink (Uplink, UL) and downlink (Downlink, DL) communication resources on the activated BWP. The UE is only allowed to use the resources of the currently activated BWP for communication in that cell.

For each UL transmission of the UE, since one BWP may include one or more RB sets in frequency domain, its UL transmission resources may include resources on one or more RB sets. For this UL transmission, the UE performs LBT operations on all involved RB sets. If LBT failure occurs on "any" one RB set (that is, the channel is busy or unavailable), the UE considers that LBT failure has been detected for this UL transmission, and this UL transmission cannot be performed.

Due to resource contention from terminals of other RATs such as Wi-Fi in unlicensed bands, the UE may continuously detect LBT failures. This means that the channel is busy for a period of time and normal communication may not be possible. To address this issue, NR-U supports "consistent LBT failure (Consistent LBT failure)" detection and related handling mechanisms for UE: determining whether to trigger the "consistent LBT failure" process by recording the cumulative number of LBT failures on the currently activated BWP of each cell. Specifically, the physical (Physical) layer of the UE performs an LBT operation for each UL transmission, and when LBT failure is detected for an UL transmission, it indicates to the medium access control (Medium Access Control, MAC) layer that LBT failure has been detected for this UL transmission (that is, an "LBT failure indication"). Since the physical layer does not inform the MAC layer on which specific RB set the LBT failure has occurred, the MAC layer considers that one LBT failure has been detected on the BWP where the current UL transmission is performed (that is, the currently activated BWP) and accumulates the count of LBT failures detected. When the cumulative count of LBT failures for any UL transmission reaches a threshold configured by the network, the UE triggers consistent LBT failure. After consistent LBT failure is triggered, the UE stops communication on the corresponding cell and BWP, reports to the network, and waits for the network to perform recovery for the consistent LBT failure (for example, resource reconfiguration).

For SL-U, it has been agreed to reuse existing processes to the greatest extent. However, compared to NR-U, the biggest difference in SL-U is that transmission resources for SL transmission are scheduled/allocated at the granularity of RP, without the concept of "activated BWP" as in NR-U, and resource scheduling/allocation is not performed on the currently activated BWP. Therefore, when the physical layer detects an SL LBT failure and sends an SL LBT failure indication to the MAC layer, it is no longer appropriate for the UE to accumulate the count and determine the consistent LBT failure on a per-BWP basis as described above. Additional designs are needed for SL-U to support consistent LBT failure detection and handling for SL-U. To this end, the sidelink listen-before-talk processing method of this application is proposed.

The sidelink listen-before-talk processing method according to the embodiments of this application is described in detail below with reference to the accompanying drawings through some embodiments and their application scenarios.

Referring to FIG. 2, an embodiment of this application provides a sidelink listen-before-talk processing method. As shown in FIG. 2, the sidelink listen-before-talk processing method includes the following steps.

Step 201: A terminal receives configuration information from a network-side device, where the configuration information includes a first timer value and a first count value, both the first timer value and the first count value are associated with a resource unit, and the resource unit includes a resource pool or a resource block set.

Step 202: The terminal determines, based on the first timer value and the first count value during a listen-before-talk process in a sidelink (Sidelink, SL) unlicensed band, whether consistent LBT failure occurs on the resource unit.

In the embodiment of this application, an independent timer and counter may be configured and used for each resource unit, or the same timer and counter may be configured and shared by multiple resource units. The counter is used to count the number of LBT failures, and the timer is used to indicate the duration of LBT. The first timer value is the timer value of the timer, and the first count value is the count value of the counter. Different resource units may configure and use timers with the same or different timer values, and similarly, different resource units may configure and use counters with the same or different count values, which are not further limited herein.

Optionally, in some embodiments, when a UE performs sidelink transmission in an unlicensed band, it needs to perform LBT and determine, based on the following process, whether consistent LBT failure occurs:
if a MAC layer receives an LBT failure indication from a physical layer, performing the following operations: controlling the counter to increase by one, and starting or restarting the timer.

Optionally, if the count value of the counter is greater than or equal to the first count value, it is determined that consistent LBT failure has occurred.

Optionally, if the timer expires (that is, the timer value of the timer exceeds the first timer value), if there is no SL transmission or SL transmission resource during operation of the timer, the counter is not reset; otherwise, the count value of the counter is reset to 0.

It should be understood that in a case that the resource unit is a resource pool, it can be understood as determining, at the granularity of a resource pool, whether consistent LBT failure occurs; and in a case that the resource unit is a resource block set, it can be understood as determining, at the granularity of a resource block set, whether consistent LBT failure occurs.

In the embodiments of this application, a terminal receives configuration information from a network-side device, where the configuration information includes a first timer value and a first count value, both the first timer value and the first count value are associated with a resource unit, and the resource unit includes a resource pool or a resource block set; and the terminal determines, based on the first timer value and the first count value during a listen-before-talk process in a sidelink SL unlicensed band, whether consistent LBT failure occurs on the resource unit. In this way, in a sidelink communication system, whether consistent LBT failure occurs is determined at the granularity of a resource pool or a resource block set. Therefore, the embodiments of this application implement the detection of consistent LBT failure in a sidelink communication system.

Optionally, in some embodiments, when it is determined that consistent LBT failure occurs, corresponding operations may be used to improve the reliability of sidelink transmission. For example, after the terminal determines, based on the first timer value and the first count value during a listen-before-talk process in a sidelink unlicensed band, whether consistent LBT failure occurs on the resource unit, the method further includes at least one of the following:
stopping, by the terminal, SL transmission in a first resource unit;
releasing, by the terminal, an SL transmission resource in the first resource unit;
sending, by the terminal, first indication information to the network-side device, where the first indication information is used to indicate occurrence of consistent LBT failure or the first resource unit; and
selecting, by the terminal, a second resource unit for communication; where
the first resource unit is a resource unit on which consistent LBT failure has occurred, and the second resource unit is a resource unit on which no LBT failure has occurred.

It should be understood that when the terminal stops SL transmission in the first resource unit or releases an SL transmission resource in the first resource unit, there is no need to perform LBT in the first resource unit, thereby preventing power loss caused by subsequent ineffective LBT performed in the first resource unit. The terminal sends the first indication information to the network-side device, preventing the network-side device from additionally scheduling the first resource unit for SL transmission, thereby improving the reliability of SL transmission. The terminal selects the second resource unit for communication, which, due to the second resource unit being a resource unit on which no consistent LBT failure has occurred, can improve the success rate of LBT, thereby enhancing the reliability of subsequent communication.

Optionally, in some embodiments, the resource pool includes at least one of the following: a sidelink communication resource pool (communication resource pool); a sidelink discovery resource pool (discovery resource pool); a sidelink dedicated resource pool (dedicated resource pool); a sidelink common resource pool (common resource pool); a sidelink transmission resource pool (transmission resource pool); a sidelink reception resource pool (reception resource pool); and a sidelink exceptional resource pool (Exceptional resource pool).

Optionally, in some embodiments, the resource block set includes at least one of the following:
a resource block set for transmitting a sidelink synchronization signal and PBCH block (Sidelink Synchronization Signal and PBCH block, S-SSB);
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

Optionally, in some embodiments, the consistent LBT failure is used to indicate failure of at least one of the following transmissions: S-SSB, PSBCH, PSFCH, PSSCH, and PSCCH.

Optionally, in a case that the resource unit is a reception resource block set or a reception resource pool, the consistent LBT failure is an SL LBT failure for PSFCH transmission.

In the embodiments of this application, the PSFCH transmission may be understood as PSFCH feedback.

Optionally, in some embodiments, after the terminal determines, based on the first timer value and the first count value during a listen-before-talk process in a sidelink SL unlicensed band, whether consistent LBT failure occurs on the resource unit, the method further includes:
performing, by the terminal, a first operation in a case that the terminal needs to perform a first PSFCH transmission on a first resource unit; where
the first resource unit is a resource unit on which consistent LBT failure occurs and the consistent LBT failure has not been canceled, and the first operation includes at least one of the following:
   sending a first notification message to a sidelink communication peer, where the first notification message is used to notify that consistent LBT failure has occurred on the first resource unit;
   ignoring PSFCH transmission on the first resource unit; and
   allowing PSFCH transmission on the first resource unit.

Optionally, after the sidelink communication peer receives the first notification message, during subsequent transmissions, the sidelink communication peer does not perform PSSCH transmission or PSCCH transmission on the resource unit on which consistent LBT failure has occurred.

Optionally, after the sidelink communication peer receives the first notification message, during subsequent transmissions, the sidelink communication peer may only send, on the resource unit on which consistent LBT failure has occurred, hybrid automatic repeat request disabled (Hybrid Automatic Repeat Request Disabled, HARQ disabled) data that does not require the terminal to perform PSFCH feedback.

For example, in some embodiments, when determining consistent LBT failure at the granularity of a resource pool, if the terminal needs to perform PSFCH feedback on resource pool 1, and resource pool 1 has already experienced consistent LBT failure that has not been canceled, the UE performs at least one of the following behaviors:

Behavior 1: The UE notifies the peer UE of the resource pool that has experienced the consistent LBT failure. Optionally, after the peer UE receives the notification, during subsequent transmissions, the peer UE does not perform PSSCH/PSCCH transmission on the resource pool that has experienced the consistent LBT failure. Optionally, after the peer UE receives the notification, during subsequent transmissions, the peer UE only sends, on the resource pool that has experienced the consistent LBT failure, HARQ disabled data that does not require the UE to perform PSFCH feedback.

Behavior 2: The UE ignores PSFCH transmission on the resource pool that has experienced the consistent LBT failure.

Behavior 3: The UE still allows PSFCH transmission on the resource pool that has experienced the consistent LBT failure.

In some embodiments, when determining consistent LBT failure at the granularity of an RB set, if the terminal needs to perform PSFCH feedback on RB set 1, and RB set 1 has already experienced consistent LBT failure that has not been canceled, the UE performs at least one of the following behaviors:

Behavior 4: The UE notifies the peer UE of the RB set that has experienced the consistent LBT failure. Optionally, after the peer UE receives the notification, during subsequent transmissions, the peer UE does not perform PSSCH/PSCCH transmission on the RB set that has experienced the consistent LBT failure. Optionally, after the peer UE receives the notification, during subsequent transmissions, the peer UE only sends, on the RB set that has experienced the consistent LBT failure, HARQ disabled data that does not require the UE to perform PSFCH feedback.

Behavior 5: The UE ignores PSFCH transmission on the RB set that has experienced the consistent LBT failure.

Behavior 6: The UE still allows PSFCH transmission on the RB set that has experienced the consistent LBT failure.

Optionally, in some embodiments, after the terminal determines, based on the first timer value and the first count value during a listen-before-talk process in a sidelink SL unlicensed band, whether consistent LBT failure occurs on the resource unit, the method further includes:
performing, by the terminal, a second operation in a case that the terminal needs to perform a second PSFCH transmission on a third resource unit and has received an LBT failure indication on the third resource unit; where
the second operation includes at least one of the following:
   maintaining a count value of a counter associated with a fourth resource unit unchanged;
   performing a counting operation on a target counter, where the target counter is used to count the number of LBT failures for PSFCH transmission; and
   sending a second notification message to a sidelink communication peer, where the second notification message is used to notify that the fourth resource unit is selected for the second PSFCH transmission; where
   the third resource unit and the fourth resource unit are different resource units.

In the embodiments of this application, the counter associated with the fourth resource unit may be understood as a counter used to count the number of LBT failures on the fourth resource unit.

When the terminal counts LBT failures on the fourth resource unit and a timer associated with the fourth resource unit permits, the terminal may need to perform PSFCH feedback to another terminal on the third resource unit. Since the LBT performed for PSFCH feedback on the third resource unit may also fail, it is necessary to consider the impact on the counter associated with the fourth resource unit and the operation of the first timer, and the terminal may perform the second operation.

Optionally, in some embodiments, when the count value of the target counter reaches a preset value, the terminal may determine that PSFCH-related consistent LBT failure has occurred. The preset value may be configured by the network-side device or specified by a protocol.

Optionally, in a case that the terminal has successfully performed LBT feedback, the terminal may reset the count value of the target counter to 0.

Optionally, that the fourth resource unit is selected for the second PSFCH transmission may be understood as selecting the fourth resource unit to perform the second PSFCH transmission.

For example, in some embodiments, when determining consistent LBT failure at the granularity of a resource pool, if the terminal is performing counting with counter 1 and running timer 1 on resource pool 1, the terminal may need to perform PSFCH feedback to another terminal on resource pool 2. Since the LBT performed for PSFCH feedback on resource pool 2 may also fail, it is necessary to consider the impact on the counting of counter 1 and the operation of timer 1 on resource pool 1.

If the UE performs LBT for the PSFCH feedback on resource pool 2 and receives an LBT failure indication (LBT failure indication) from the physical layer, the UE performs at least one of the following behaviors:
maintaining the count value of counter 1 unchanged, meaning that the LBT failure for the PSFCH feedback on resource pool 2 is not counted in the count value of counter 1;
increasing the target counter by one, where the target counter is used to separately count the number of LBT failures for PSFCH feedback; optionally, when the count value of the target counter reaches a preset value, the terminal determines that PSFCH-related consistent LBT failure has occurred; optionally, if the UE has successfully performed PSFCH feedback, the count value of the target counter is reset to 0; and
indicating, by the UE, to a peer UE the selection/use of resource pool 1 for PSFCH transmission.

In some embodiments, when determining consistent LBT failure at the granularity of an RB set, if the terminal is performing counting with counter 1 and running timer 1 on RB set 1, the terminal may need to perform PSFCH feedback to another terminal on RB set 2. Since LBT performed for the PSFCH feedback on RB set 2 may also fail, it is necessary to consider the impact on the counting of counter 1 and the operation of timer 1 on RB set 1.

If the UE performs LBT for the PSFCH feedback on RB set 2 and receives an LBT failure indication (LBT failure indication) from the physical layer, the UE performs at least one of the following behaviors:
maintaining the count value of counter 1 unchanged, meaning that the LBT failure for the PSFCH feedback on RB set 2 is not counted in the count value of counter 1;
increasing the target counter by one, where the target counter is used to separately count the number of LBT failures for PSFCH feedback; optionally, when the count value of the target counter reaches a preset value, the terminal determines that PSFCH-related consistent LBT failure has occurred; optionally, if the UE has successfully performed PSFCH feedback, the count value of the target counter is reset to 0; and
indicating, by the UE, to a peer UE the selection/use of RB set 1 for PSFCH transmission.

Optionally, in some embodiments, the determining, based on the first timer value and the first count value, whether consistent LBT failure occurs on the resource unit includes:
in a case that an LBT failure indication is received on the resource unit, controlling, by the terminal, a first counter associated with the resource unit to perform a counting operation, and starting or restarting a first timer; and
in a case that the first counter is greater than or equal to the first count value, determining, by the terminal, that the resource unit has experienced consistent LBT failure.

Optionally, in a case that a running duration of the first timer exceeds the first timer value, the terminal performs a third operation; where
the third operation includes: during operation of the first timer, in a case that there is no SL transmission or SL transmission resource on the resource unit, skipping resetting, by the terminal, the first counter.

Optionally, in the embodiments of this application, during operation of the first timer, if there is SL transmission or SL transmission resource on the resource unit, the terminal resets the first counter. The terminal resetting the first counter may be understood as the terminal resetting the count value of the first counter to 0.

Optionally, in some embodiments, the method further includes at least one of the following:
receiving, by the terminal, first information from the network-side device, where the first information is used to indicate reconfiguration or release of a resource pool corresponding to at least one resource pool identifier, and canceling consistent LBT failure for a target resource unit in the resource pool corresponding to the resource pool identifier; and
receiving, by the terminal, second information from the network-side device, where the second information is used to indicate a change in resource pool configuration or indicate an update of a system message for sidelink configuration, and canceling consistent LBT failure for target resource units in all resource pools; where
the target resource unit is a resource unit on which consistent LBT failure has occurred.

In the embodiments of this application, the system message for indicating sidelink configuration may be system information block 12 (System Information Block 12, SIB12).

It should be understood that in the embodiments of this application, when the terminal is in a radio resource control (Radio Resource Control, RRC) connected state (RRC_CONNECTED), the network-side device may send the first information to indicate reconfiguration or release of a resource pool corresponding to at least one resource pool identifier. When the terminal is in a non-connected state, the network-side device may send the second information to indicate a change in resource pool configuration or an update of a system message for sidelink configuration. After receiving the first information or the second information, the terminal may cancel the consistent LBT failure for the target resource unit in the resource pool. The non-connected state may include an RRC idle state (RRC_IDLE) or an RRC inactive state (RRC_INACTIVE).

Optionally, the canceling consistent LBT failure for a target resource unit may be understood as the terminal being able to use the target resource unit for transmission subsequently.

For example, in some embodiments, when determining consistent LBT failure at the granularity of a resource pool, the UE's determination of consistent LBT failure for each resource pool may be performed independently. When the network-side device changes configuration of a resource pool, the UE needs to handle the consistent LBT failure already triggered in the corresponding resource pool.

For an RRC_CONNECTED UE, the resource pool used by the UE is a dedicated resource pool. If the network-side device reconfigures or releases the resource pools corresponding to resource pool ID M1, resource pool ID M2, and resource pool ID M3 for the RRC_CONNECTED UE, the UE performs the following behavior:
if the resource pools corresponding to resource pool ID M1, resource pool ID M2, and resource pool ID M3 have experienced consistent LBT failure, canceling (cancel) the consistent LBT failure that has occurred on the resource pools corresponding to resource pool ID M1, resource pool ID M2, and resource pool ID M3.

For an RRC_IDLE/RRC_INACTIVE UE, the resource pool used by the UE is a common resource pool, indicated by a system information block (System Information Block, SIB) message. If the network-side device changes the resource pool configuration or resource pool list configuration indicated in the SIB message, for example, updates a SIB message indicating sidelink configuration, the UE performs the following behavior:
if any of the resource pools has experienced consistent LBT failure, canceling the consistent LBT failure that has occurred on the resource pool.

In some embodiments, when determining consistent LBT failure at the granularity of an RB set, the UE may determine consistent LBT failure for each RB set independently. When the network-side device changes configuration of an RB set, the UE needs to handle the consistent LBT failure already triggered in the corresponding RB set.

For an RRC_CONNECTED UE, the RB set used by the UE is a dedicated RB set. If the network-side device reconfigures or releases the RB sets corresponding to RB set ID M1, RB set ID M2, and RB set ID M3 for the RRC_CONNECTED UE, the UE performs the following behavior:
if the RB sets corresponding to RB set ID M1, RB set ID M2, and RB set ID M3 has experienced consistent LBT failure, canceling (cancel) the consistent LBT failure that has occurred on the RB sets corresponding to RB set ID M1, RB set ID M2, and RB set ID M3.

For an RRC_IDLE/RRC_INACTIVE UE, the RB set used by the UE is a common RB set, indicated by a SIB message. If the network-side device changes the RB set configuration or RB set list configuration indicated in the SIB message, for example, updates a SIB message indicating sidelink configuration, the UE performs the following behavior:
if at least one RB set in any of the resource pools has experienced consistent LBT failure, canceling the consistent LBT failure that has occurred on all RB sets in the resource pool that have experienced consistent LBT failures.

Optionally, in some embodiments, in a case that the resource unit is a resource block set, the method further includes:
performing, by the terminal, a fourth operation in a case that consistent LBT failure occurs on a first resource block set in a first resource pool; where the first resource pool is a resource pool currently used by the terminal, and the fourth operation includes at least one of the following:
discarding or clearing an SL grant resource containing the first resource block set;
performing resource reselection or resource pool reselection for an SL process (Sidelink process) associated with the first resource block set;
indicating, by a media access control MAC layer, the first resource block set to a physical layer;
excluding the first resource block set when a MAC layer or a physical layer of the terminal performs resource selection or resource reselection; and
performing resource pool reselection.

Optionally, the performing resource pool reselection satisfies at least one of the following:
a condition for the resource pool reselection includes that all resource block sets in the first resource pool have experienced consistent LBT failure;
a reselected resource pool includes at least one resource block set that has not experienced consistent LBT failure;
reselection to a target resource pool is prioritized, where none of resource block sets contained in the target resource pool has experienced consistent LBT failure; and
resource reselection is performed based on the first resource pool in a case that all resource pools contain resource block sets that have experienced consistent LBT failure.

Optionally, in a case that the resource unit is a resource block set, the method further includes at least one of the following:
performing, by the terminal, a fifth operation in a case that none of resource block sets in a second resource pool has experienced consistent LBT failure; and
performing, by the terminal, a sixth operation in a case that at least one resource block set in the second resource pool has experienced consistent LBT failure; where
the fifth operation includes at least one of the following: determining that the resource block sets of the second resource pool are full-set resources; indicating, by the MAC layer of the terminal, the full-set resources of the second resource pool to the physical layer; indicating, by the MAC layer of the terminal, to the physical layer that a transmission mode on the second resource pool is a full-set transmission mode; indicating the full-set resources of the second resource pool to the network-side device; indicating to the network-side device that the transmission mode on the second resource pool is a full-set transmission mode; indicating the full-set resources of the second resource pool to the sidelink communication peer; and indicating to the sidelink communication peer that the transmission mode on the second resource pool is a full-set transmission mode; and
the sixth operation includes at least one of the following: determining that the resource block sets of the second resource pool are truncated resources; indicating, by the MAC layer of the terminal, the truncated resources of the second resource pool to the physical layer; indicating, by the MAC layer of the terminal, to the physical layer that a transmission mode on the second resource pool is a truncated transmission mode; indicating the truncated resources of the second resource pool to the network-side device; indicating to the network-side device that the transmission mode on the second resource pool is a truncated transmission mode; indicating the truncated resources of the second resource pool to the sidelink communication peer; and indicating to the sidelink communication peer that the transmission mode on the second resource pool is a truncated transmission mode; where
the truncated resources are resource block sets that have not experienced consistent LBT failure in the second resource pool.

It should be understood that when the truncated resources are an empty set, that is, the truncated resources do not include any resources that have not triggered consistent LBT failure, the UE performs the fourth operation.

Optionally, after the terminal performs the sixth operation in a case that at least one resource block set in the second resource pool has experienced consistent LBT failure, the method further includes:
performing, by the terminal, the fifth operation or the sixth operation again in a case that a second resource block set recovers from consistent LBT failure or consistent LBT failure of the second resource block set is canceled; where
the second resource block set is a resource block set that has experienced consistent LBT failure in the second resource pool.

Optionally, in the embodiments of this application, after the second resource block set recovers from consistent LBT failure, the terminal can continue to perform LBT or SL transmission on the second resource block set.

In the embodiments of this application, when any resource block set that has experienced consistent LBT failure in the second resource pool recovers from the consistent LBT failure or has its consistent LBT failure canceled, the resource block sets in the second resource pool that currently have not experienced consistent LBT failure are re-determined, that is, the resource block sets on which the consistent LBT failure has been canceled or that have recovered from consistent LBT failure are determined as resource block sets that have not experienced consistent LBT failure. If the re-determined resource block sets that currently have not experienced consistent LBT failure are full-set resources, the fifth operation is performed. If the re-determined resource block sets that currently have not experienced consistent LBT failure are truncated resources, the sixth operation is performed.

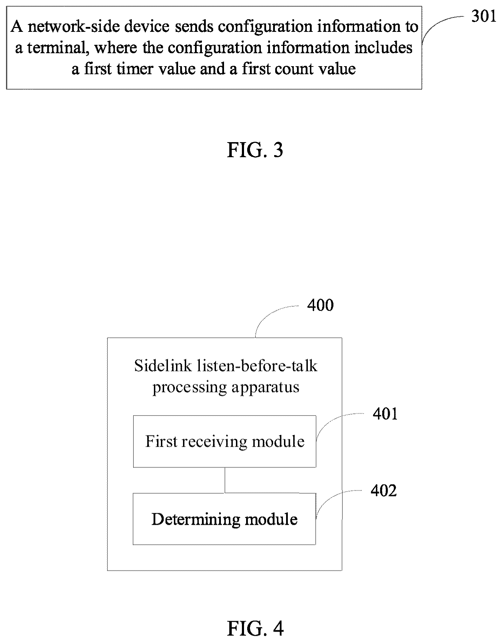

Referring to FIG. 3, an embodiment of this application further provides a sidelink listen-before-talk processing method. As shown in FIG. 3, the sidelink listen-before-talk processing method includes the following step:

Step 301: A network-side device sends configuration information to a terminal, where the configuration information includes a first timer value and a first count value, both the first timer value and the first count value are associated with a resource unit, the resource unit includes a resource pool or a resource block set, and the first timer value and the first count value are used for the terminal to determine whether consistent LBT failure occurs on the resource unit during a listen-before-talk process in a sidelink SL unlicensed band.

Optionally, the resource pool includes at least one of the following: a sidelink communication resource pool; a sidelink discovery resource pool; a sidelink dedicated resource pool; a sidelink common resource pool; a sidelink transmission resource pool; a sidelink reception resource pool; and a sidelink exceptional resource pool.

Optionally, the resource block set includes at least one of the following:
a resource block set for transmitting a sidelink synchronization signal and PBCH block S-SSB;
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

Optionally, the consistent LBT failure is used to indicate failure of at least one of the following transmissions: S-SSB, PSBCH, physical sidelink feedback channel PSFCH, PSSCH, and PSCCH.

Optionally, in a case that the resource unit is a reception resource block set or a reception resource pool, the consistent LBT failure is an SL LBT failure for PSFCH transmission.

Optionally, after the network-side device sends configuration information to the terminal, the method further includes:
receiving, by the network-side device, a first notification message from the terminal in a case that the terminal needs to perform a first PSFCH transmission based on a first resource unit, where the first notification message is used to notify that consistent LBT failure has occurred on the first resource unit, and the first resource unit is a resource unit on which consistent LBT failure occurs and the consistent LBT failure has not been canceled.

Optionally, after the network-side device sends configuration information to the terminal, the method further includes at least one of the following:
sending, by the network-side device, first information to the terminal, where the first information is used to indicate reconfiguration or release of a resource pool corresponding to at least one resource pool identifier; and
sending, by the network-side device, second information to the terminal, where the second information is used to indicate a change in resource pool configuration or indicate an update of a system message for sidelink configuration.

The sidelink listen-before-talk processing method according to the embodiments of this application may be performed by a sidelink listen-before-talk processing apparatus. In the embodiments of this application, the sidelink listen-before-talk processing apparatus performing the sidelink listen-before-talk processing method is used as an example to describe the sidelink listen-before-talk processing apparatus provided in the embodiments of this application.

Referring to FIG. 4, an embodiment of this application further provides a sidelink listen-before-talk processing apparatus. As shown in FIG. 4, the sidelink listen-before-talk processing apparatus 400 includes:
a first receiving module 401 configured to receive configuration information from a network-side device, where the configuration information includes a first timer value and a first count value, both the first timer value and the first count value are associated with a resource unit, and the resource unit includes a resource pool or a resource block set; and
a determining module 402 configured to determine, based on the first timer value and the first count value during a listen-before-talk process in a sidelink SL unlicensed band, whether consistent LBT failure occurs on the resource unit.

Optionally, the sidelink listen-before-talk processing apparatus 400 further includes at least one of the following:
a control module configured to stop SL transmission in a first resource unit;
a release module configured to release an SL transmission resource in the first resource unit;
a first sending module configured to send first indication information to the network-side device, where the first indication information is used to indicate occurrence of consistent LBT failure or the first resource unit; and
a selection module configured to select a second resource unit for communication; where
the first resource unit is a resource unit on which consistent LBT failure has occurred, and the second resource unit is a resource unit on which no LBT failure has occurred.

Optionally, the resource pool includes at least one of the following: a sidelink communication resource pool; a sidelink discovery resource pool; a sidelink dedicated resource pool; a sidelink common resource pool; a sidelink transmission resource pool; a sidelink reception resource pool; and a sidelink exceptional resource pool.

Optionally, the resource block set includes at least one of the following:
a resource block set for transmitting a sidelink synchronization signal and PBCH block S-SSB;
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

Optionally, the consistent LBT failure is used to indicate failure of at least one of the following transmissions: S-SSB, PSBCH, physical sidelink feedback channel PSFCH, PSSCH, and PSCCH.

Optionally, in a case that the resource unit is a reception resource block set or a reception resource pool, the consistent LBT failure is an SL LBT failure for PSFCH transmission.

Optionally, the sidelink listen-before-talk processing apparatus 400 further includes:
a first execution module configured to perform a first operation in a case that the terminal needs to perform a first PSFCH transmission on a first resource unit; where
the first resource unit is a resource unit on which consistent LBT failure occurs and the consistent LBT failure has not been canceled, and the first operation includes at least one of the following:
   sending a first notification message to a sidelink communication peer, where the first notification message is used to notify that consistent LBT failure has occurred on the first resource unit;
   ignoring PSFCH transmission on the first resource unit; and
   allowing PSFCH transmission on the first resource unit.

Optionally, the sidelink listen-before-talk processing apparatus 400 further includes:
a second execution module configured to perform a second operation in a case that the terminal needs to perform a second PSFCH transmission on a third resource unit and has received an LBT failure indication on the third resource unit; where
the second operation includes at least one of the following:
   maintaining a count value of a counter associated with a fourth resource unit unchanged;
   performing a counting operation on a target counter, where the target counter is used to count the number of LBT failures for PSFCH transmission; and
   sending a second notification message to a sidelink communication peer, where the second notification message is used to notify that the fourth resource unit is selected for the second PSFCH transmission; where
   the third resource unit and the fourth resource unit are different resource units.

Optionally, the determining module 402 is specifically configured to: in a case that an LBT failure indication is received on the resource unit, control a first counter associated with the resource unit to perform a counting operation, and start or restart a first timer; and in a case that the first counter is greater than or equal to the first count value, determine that consistent LBT failure has occurred on the resource unit.

Optionally, the sidelink listen-before-talk processing apparatus 400 further includes:
a third execution module configured to perform a third operation in a case that a running duration of the first timer exceeds the first timer value; where
the third operation includes: during operation of the first timer, in a case that there is no SL transmission or SL transmission resource on the resource unit, skipping resetting, by the terminal, the first counter; otherwise, resetting, by the terminal, the first counter.

Optionally, the sidelink listen-before-talk processing apparatus 400 further includes: a first receiving module configured to perform at least one of the following:
receiving first information from the network-side device, where the first information is used to indicate reconfiguration or release of a resource pool corresponding to at least one resource pool identifier, and canceling consistent LBT failure for a target resource unit in the resource pool corresponding to the resource pool identifier; and
receiving second information from the network-side device, where the second information is used to indicate a change in resource pool configuration or indicate an update of a system message for sidelink configuration, and canceling consistent LBT failure for target resource units in all resource pools; where
the target resource unit is a resource unit on which consistent LBT failure has occurred.

Optionally, in a case that the resource unit is a resource block set, the sidelink listen-before-talk processing apparatus 400 further includes:
a fourth execution module configured to perform a fourth operation in a case that consistent LBT failure occurs on a first resource block set in a first resource pool; where the first resource pool is a resource pool currently used by the terminal, and the fourth operation includes at least one of the following:
discarding or clearing an SL grant resource containing the first resource block set;
performing resource reselection or resource pool reselection for an SL process associated with the first resource block set;
indicating, by a media access control MAC layer, the first resource block set to a physical layer;
excluding the first resource block set when a MAC layer or a physical layer of the terminal performs resource selection or resource reselection; and
performing resource pool reselection.

Optionally, the performing resource pool reselection satisfies at least one of the following:
a condition for the resource pool reselection includes that all resource block sets in the first resource pool have experienced consistent LBT failure;
a reselected resource pool includes at least one resource block set that has not experienced consistent LBT failure;
reselection to a target resource pool is prioritized, where none of resource block sets contained in the target resource pool has experienced consistent LBT failure; and
resource reselection is performed based on the first resource pool in a case that all resource pools contain resource block sets that have experienced consistent LBT failure.

Optionally, in a case that the resource unit is a resource block set, the sidelink listen-before-talk processing apparatus 400 further includes a fifth execution module configured to perform at least one of the following:
performing a fifth operation in a case that none of resource block sets in a second resource pool has experienced consistent LBT failure; and
performing a sixth operation in a case that at least one resource block set in the second resource pool has experienced consistent LBT failure; where
the fifth operation includes at least one of the following: determining that the resource block sets of the second resource pool are full-set resources; indicating, by the MAC layer of the terminal, the full-set resources of the second resource pool to the physical layer; indicating, by the MAC layer of the terminal, to the physical layer that a transmission mode on the second resource pool is a full-set transmission mode; indicating the full-set resources of the second resource pool to the network-side device; indicating to the network-side device that the transmission mode on the second resource pool is a full-set transmission mode; indicating the full-set resources of the second resource pool to the sidelink communication peer; and indicating to the sidelink communication peer that the transmission mode on the second resource pool is a full-set transmission mode; and
the sixth operation includes at least one of the following: determining that the resource block sets of the second resource pool are truncated resources; indicating, by the MAC layer of the terminal, the truncated resources of the second resource pool to the physical layer; indicating, by the MAC layer of the terminal, to the physical layer that a transmission mode on the second resource pool is a truncated transmission mode; indicating the truncated resources of the second resource pool to the network-side device; indicating to the network-side device that the transmission mode on the second resource pool is a truncated transmission mode; indicating the truncated resources of the second resource pool to the sidelink communication peer; and indicating to the sidelink communication peer that the transmission mode on the second resource pool is a truncated transmission mode; where
the truncated resources are resource block sets that have not experienced consistent LBT failure in the second resource pool.

Optionally, the fifth execution module is further configured to perform, for the terminal, the fifth operation or the sixth operation again in a case that a second resource block set recovers from consistent LBT failure or the consistent LBT failure of the second resource block set is canceled; where
the second resource block set is a resource block set that has experienced consistent LBT failure in the second resource pool.

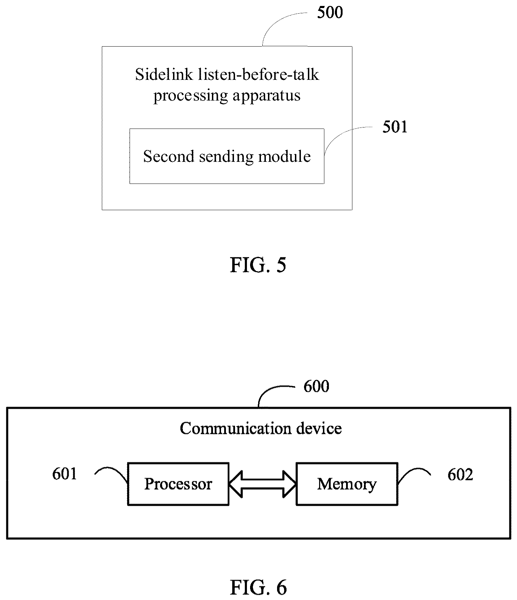

Referring to FIG. 5, an embodiment of this application further provides a sidelink listen-before-talk processing apparatus. As shown in FIG. 5, the sidelink listen-before-talk processing apparatus 500 includes:
a second sending module 501 configured to send configuration information to a terminal, where the configuration information includes a first timer value and a first count value, both the first timer value and the first count value are associated with a resource unit, the resource unit includes a resource pool or a resource block set, and the first timer value and the first count value are used by the terminal to determine, during a listen-before-talk process in a sidelink SL unlicensed band, whether consistent LBT failure occurs on the resource unit.

Optionally, the resource pool includes at least one of the following: a sidelink communication resource pool; a sidelink discovery resource pool; a sidelink dedicated resource pool; a sidelink common resource pool; a sidelink transmission resource pool; a sidelink reception resource pool; and a sidelink exceptional resource pool.

Optionally, the resource block set includes at least one of the following:
a resource block set for transmitting a sidelink synchronization signal and PBCH block S-SSB;
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

Optionally, the consistent LBT failure is used to indicate failure of at least one of the following transmissions: S-SSB, PSBCH, physical sidelink feedback channel PSFCH, PSSCH, and PSCCH.

Optionally, in a case that the resource unit is a reception resource block set or a reception resource pool, the consistent LBT failure is an SL LBT failure for PSFCH transmission.

Optionally, the sidelink listen-before-talk processing apparatus 500 further includes:
a second receiving module configured to receive a first notification message from the terminal in a case that the terminal needs to perform a first PSFCH transmission based on a first resource unit, where the first notification message is used to notify that consistent LBT failure has occurred on the first resource unit, and the first resource unit is a resource unit on which consistent LBT failure occurs and the consistent LBT failure has not been canceled.

Optionally, the second sending module 501 is further configured to perform at least one of the following:
sending first information to the terminal, where the first information is used to indicate reconfiguration or release of a resource pool corresponding to at least one resource pool identifier; and
sending second information to the terminal, where the second information is used to indicate a change in resource pool configuration or indicate an update of a system message for sidelink configuration.

The sidelink listen-before-talk processing apparatus in the embodiments of this application may be an electronic device, such as an electronic device with an operating system, or a component in an electronic device, such as an integrated circuit or chip. The electronic device may be a terminal or a device other than a terminal. For example, the terminal may include, but is not limited to, the types of terminal 11 listed above, and other devices may be servers, network attached storage (Network Attached Storage, NAS), and the like, which are not specifically limited in the embodiments of this application.

The sidelink listen-before-talk processing apparatus provided in the embodiments of this application can implement the processes implemented by the method embodiments of FIG. 2 and FIG. 3, with the same technical effects achieved. To avoid repetition, details are not described herein again.

As shown in FIG. 6, an embodiment of this application further provides a communication device 600, including a processor 601 and a memory 602. The memory 602 stores a program or an instruction capable of running on the processor 601. When the program or instruction is executed by the processor 601, the steps of the foregoing sidelink listen-before-talk processing method embodiments are implemented, with the same technical effects achieved. To avoid repetition, details are not described herein again.

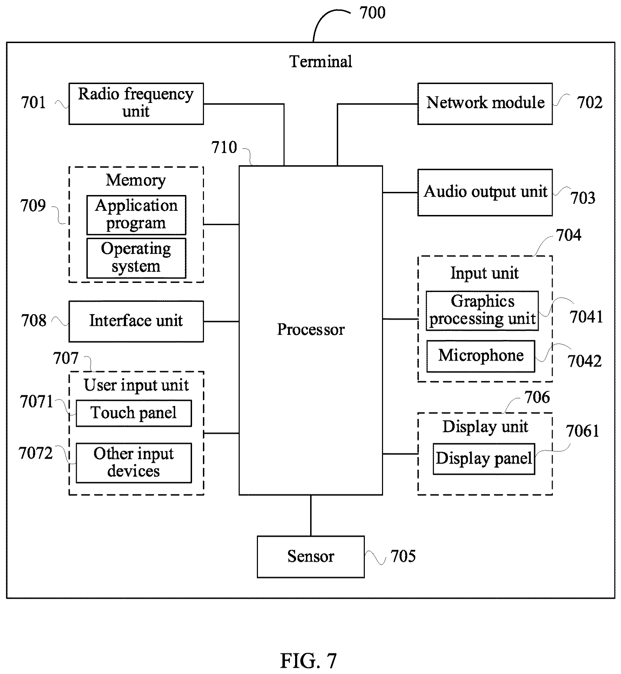

An embodiment of this application further provides a terminal including a processor and a communication interface. The communication interface is configured to receive configuration information from a network-side device, where the configuration information includes a first timer value and a first count value, both the first timer value and the first count value are associated with a resource unit, and the resource unit includes a resource pool or a resource block set. The processor is configured to determine, based on the first timer value and the first count value during a listen-before-talk process in a sidelink SL unlicensed band, whether consistent LBT failure occurs on the resource unit. This terminal embodiment corresponds to the terminal-side method embodiment described above, and all implementation processes and methods of the method embodiment are applicable to this terminal embodiment, with the same technical effects achieved. Specifically, FIG. 7 is a schematic diagram of a hardware structure of a terminal implementing an embodiment of this application.

The terminal 700 includes, but is not limited to, at least some of the following components: a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power source (such as a battery) supplying power to each component, and the power source may be logically connected to the processor 710 through a power management system, thereby implementing functions such as charge management, discharge management, and power consumption management through the power management system. The terminal structure shown in FIG. 7 does not constitute a limitation on the terminal, and the terminal may include more or fewer components than shown, or combine certain components, or have a different component arrangement, which is not described herein again.

It should be understood that, in embodiments of this application, the input unit 704 may include a graphics processing unit (graphics processing unit, GPU) 7041 and a microphone 7042, the graphics processing unit 7041 processing image data of still pictures or videos obtained by an image capture device (such as a camera) in a video capture mode or an image capture mode. The display unit 706 may include a display panel 7061, which may be configured in the form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection device and a touch controller. Other input devices 7072 may include, but are not limited to, a physical keyboard, a function key (such as a volume control key or an on/off key), a trackball, a mouse, and a joystick, which are not described herein.

In the embodiments of this application, after receiving downlink data from a network-side device, the radio frequency unit 701 may transmit it to the processor 710 for processing; in addition, the radio frequency unit 701 may send uplink data to the network-side device. Typically, the radio frequency unit 701 includes, but is not limited to, an antenna, an amplifier, a transceiver, a coupler, a low noise amplifier, a duplexer, and the like.

The memory 709 may be used to store software programs or instructions and various data. The memory 709 may mainly include a first storage area for storing programs or instructions and a second storage area for storing data, where the first storage area may store an operating system, an application or instruction required for at least one function (such as a sound play function and an image play function), and the like. Further, the memory 709 may include volatile memory or non-volatile memory, or the memory 709 may include both volatile and non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 709 in embodiments of this application includes, but is not limited to, these and any other suitable types of memory.

The processor 710 may include one or more processing units; optionally, the processor 710 integrates an application processor and a modem processor, where the application processor mainly handles operations related to the operating system, user interface, and applications, and the modem processor mainly handles wireless communication signals, such as a baseband processor. It can be understood that the modem processor may not be integrated into the processor 710.

The radio frequency unit 701 is configured to receive configuration information from a network-side device, where the configuration information includes a first timer value and a first count value, both the first timer value and the first count value are associated with a resource unit, and the resource unit includes a resource pool or a resource block set;

The processor 710 is configured to determine, based on the first timer value and the first count value during a listen-before-talk process in a sidelink SL unlicensed band, whether consistent LBT failure occurs on the resource unit.

An embodiment of this application further provides a network-side device including a processor and a communication interface. The communication interface is configured to send configuration information to a terminal, where the configuration information includes a first timer value and a first count value, both the first timer value and the first count value are associated with a resource unit, the resource unit includes a resource pool or a resource block set, and the first timer value and the first count value are used by the terminal to determine, during a listen-before-talk process in a sidelink SL unlicensed band, whether consistent LBT failure occurs on the resource unit. This network-side device embodiment corresponds to the network-side device method embodiment described above, and all implementation processes and methods of the method embodiment are applicable to this network-side device embodiment, with the same technical effects achieved.

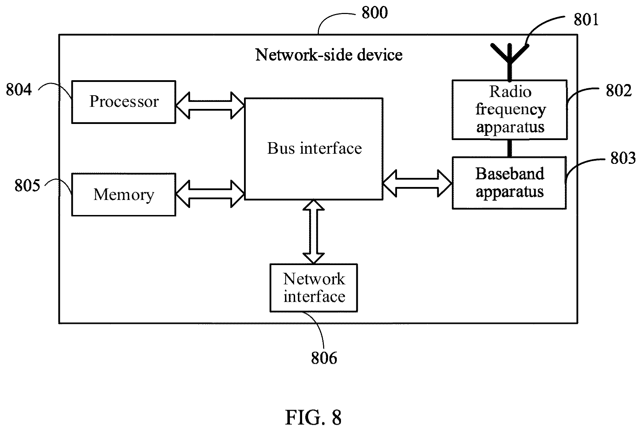

Specifically, an embodiment of this application further provides a network-side device. As shown in FIG. 8, the network-side device 800 includes: an antenna 801, a radio frequency device 802, a baseband device 803, a processor 804, and a memory 805. The antenna 801 is connected to the radio frequency device 802. In the uplink direction, the radio frequency device 802 receives information through the antenna 801 and sends the received information to the baseband device 803 for processing. In the downlink direction, the baseband device 803 processes information to be sent and sends it to the radio frequency device 802, and the radio frequency device 802 processes the received information and sends it out through the antenna 801.

The method performed by the network-side device in the above embodiments may be implemented in the baseband device 803, which includes a baseband processor.

The baseband device 803 may, for example, include at least one baseband board, on which multiple chips are disposed, as shown in FIG. 8, where one chip, for example, is a baseband processor, connected to the memory 805 through a bus interface to call a program in the memory 805 to perform the network device operations shown in the above method embodiments.

The network-side device may further include a network interface 806, which is, for example, a common public radio interface (common public radio interface, CPRI).

Specifically, the network-side device 800 of the embodiment of this application further includes: instructions or a program stored in the memory 805 and executable on the processor 804, the processor 804 calling the instructions or program in the memory 805 to perform the methods performed by the modules shown in FIG. 5, and achieving the same technical effects. To avoid repetition, details are not described herein again.

An embodiment of this application further provides a readable storage medium. The readable storage medium stores a program or an instruction. When the program or instruction is executed by a processor, the processes of the foregoing sidelink listen-before-talk processing method embodiments are implemented, with the same technical effects achieved. To avoid repetition, details are not described herein again.

The processor is the processor in the terminal described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface, where the communication interface is coupled to the processor, and the processor is configured to run a program or an instruction to implement the processes of the foregoing sidelink listen-before-talk processing method embodiments, with the same technical effects achieved. To avoid repetition, details are not described herein again.

It should be understood that the chip mentioned in the embodiment of this application may also be referred to as a system-on-chip, a system chip, a chip system, or a system on chip.

An embodiment of this application further provides a computer program/program product. The computer program/program product is stored in a storage medium. The computer program/program product is executed by at least one processor to implement the processes of the foregoing sidelink listen-before-talk processing method embodiments, with the same technical effects achieved. To avoid repetition, details are not described herein again.

An embodiment of this application further provides a communication system including: a terminal and a network-side device. The terminal is configured to perform the processes of the method embodiment in FIG. 2 and the foregoing terminal-side embodiments, and the network-side device is configured to perform the processes of the method embodiment in FIG. 3 and the foregoing network-side device embodiments, with the same technical effects achieved. To avoid repetition, details are not described herein again.

It should be noted that in this specification, the terms "include", "comprise", or any other variants thereof are intended to cover a non-exclusive inclusion, such that a process, method, article, or apparatus that includes a series of elements not only includes those elements but also includes other elements not explicitly listed, or also includes elements inherent to such a process, method, article, or apparatus. Without further limitation, an element defined by the phrase "including a ..." does not exclude the presence of other identical elements in the process, method, article, or apparatus that includes the element. In addition, it should be pointed out that the scope of the methods and apparatuses in the embodiments of this application is not limited to performing functions in the order shown or discussed, but may also include performing functions in a substantially simultaneous manner or in a reverse order according to the functions involved, for example, the described methods may be performed in an order different from that described, and various steps may be added, omitted, or combined. Furthermore, features described with reference to certain examples may be combined in other examples.

Through the description of the above embodiments, those skilled in the art can clearly understand that the above embodiment methods can be implemented by means of software plus a necessary general hardware platform, and of course, can also be implemented by hardware, but in many cases, the former is a better implementation. Based on this understanding, the technical solution of this application, or the part that contributes to the related art, can be embodied in the form of a computer software product, the computer software product being stored in a storage medium (such as a ROM/RAM, a magnetic disk, or an optical disc), including several instructions to enable a terminal (which may be a mobile phone, a computer, a server, an air conditioner, a network device, or the like) to perform the methods described in the embodiments of this application.

The embodiments of this application have been described above with reference to the accompanying drawings, but this application is not limited to the specific embodiments described above. The specific embodiments described above are merely illustrative and not restrictive. Under the inspiration of this application, those of ordinary skill in the art can make many forms without departing from the purpose of this application and the scope of protection of the claims, all of which fall within the protection of this application.

## Claims

1. A sidelink listen-before-talk processing method, comprising:
receiving, by a terminal, configuration information from a network-side device, wherein the configuration information comprises a first timer value and a first count value, both the first timer value and the first count value are associated with a resource unit, and the resource unit comprises a resource pool or a resource block set; and
determining, by the terminal based on the first timer value and the first count value during a listen-before-talk process in a sidelink SL unlicensed band, whether consistent LBT failure occurs on the resource unit.

2. The method according to claim 1, wherein after the determining, by the terminal based on the first timer value and the first count value during a listen-before-talk process in a sidelink unlicensed band, whether consistent LBT failure occurs on the resource unit, the method further comprises at least one of the following:
stopping, by the terminal, SL transmission in a first resource unit;
releasing, by the terminal, an SL transmission resource in the first resource unit;
sending, by the terminal, first indication information to the network-side device, wherein the first indication information is used to indicate occurrence of consistent LBT failure or the first resource unit; and
selecting, by the terminal, a second resource unit for communication; wherein
the first resource unit is a resource unit on which consistent LBT failure has occurred, and the second resource unit is a resource unit on which no LBT failure has occurred.

3. The method according to claim 1 or 2, wherein the resource pool comprises at least one of the following: a sidelink communication resource pool; a sidelink discovery resource pool; a sidelink dedicated resource pool; a sidelink common resource pool; a sidelink transmission resource pool; a sidelink reception resource pool; and a sidelink exceptional resource pool.

4. The method according to claim 1 or 2, wherein the resource block set comprises at least one of the following:
a resource block set for transmitting a sidelink synchronization signal and PBCH block S-SSB;
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

5. The method according to any one of claims 1 to 4, wherein the consistent LBT failure is used to indicate failure of at least one of the following transmissions: S-SSB, PSBCH, PSFCH, PSSCH, and PSCCH.

6. The method according to any one of claims 1 to 5, wherein in a case that the resource unit is a reception resource block set or a reception resource pool, the consistent LBT failure is an SL LBT failure for PSFCH transmission.

7. The method according to any one of claims 1 to 6, wherein after the determining, by the terminal based on the first timer value and the first count value during a listen-before-talk process in a sidelink SL unlicensed band, whether consistent LBT failure occurs on the resource unit, the method further comprises:
performing, by the terminal, a first operation in a case that the terminal needs to perform a first PSFCH transmission on a first resource unit; wherein
the first resource unit is a resource unit on which consistent LBT failure occurs and the consistent LBT failure has not been canceled, and the first operation comprises at least one of the following:
sending a first notification message to a sidelink communication peer, wherein the first notification message is used to notify that consistent LBT failure has occurred on the first resource unit;
ignoring PSFCH transmission on the first resource unit; and
allowing PSFCH transmission on the first resource unit.

8. The method according to any one of claims 1 to 6, wherein after the determining, by the terminal based on the first timer value and the first count value during a listen-before-talk process in a sidelink SL unlicensed band, whether consistent LBT failure occurs on the resource unit, the method further comprises:
performing, by the terminal, a second operation in a case that the terminal needs to perform a second PSFCH transmission on a third resource unit and has received an LBT failure indication on the third resource unit; wherein
the second operation comprises at least one of the following:
maintaining a count value of a counter associated with a fourth resource unit unchanged;
performing a counting operation on a target counter, wherein the target counter is used to count the number of LBT failures for PSFCH transmission; and
sending a second notification message to a sidelink communication peer, wherein the second notification message is used to notify that the fourth resource unit is selected for the second PSFCH transmission; wherein
the third resource unit and the fourth resource unit are different resource units.

9. The method according to claim 1, wherein the determining, based on the first timer value and the first count value, whether consistent LBT failure occurs on the resource unit comprises:
controlling, by the terminal, a first counter associated with the resource unit to perform a counting operation and starting or restarting a first timer, in a case that an LBT failure indication is received on the resource unit; and
determining, by the terminal, that consistent LBT failure has occurred on the resource unit, in a case that the first counter is greater than or equal to the first count value.

10. The method according to claim 9, wherein the method further comprises:
performing, by the terminal, a third operation in a case that a running duration of the first timer exceeds the first timer value; wherein
the third operation comprises: during operation of the first timer, in a case that there is no SL transmission or SL transmission resource on the resource unit, skipping resetting, by the terminal, the first counter.

11. The method according to any one of claims 1 to 10, wherein the method further comprises at least one of the following:
receiving, by the terminal, first information from the network-side device, wherein the first information is used to indicate reconfiguration or release of a resource pool corresponding to at least one resource pool identifier, canceling consistent LBT failure for a target resource unit in the resource pool corresponding to the resource pool identifier; and
receiving, by the terminal, second information from the network-side device, wherein the second information is used to indicate a change in resource pool configuration or indicate an update of a system message for sidelink configuration, and canceling consistent LBT failure for target resource units in all resource pools; wherein
the target resource unit is a resource unit on which consistent LBT failure has occurred.

12. The method according to any one of claims 1 to 11, wherein in a case that the resource unit is a resource block set, the method further comprises:
performing, by the terminal, a fourth operation in a case that consistent LBT failure occurs on a first resource block set in a first resource pool; wherein the fourth operation comprises at least one of the following:
discarding or clearing an SL grant resource containing the first resource block set;
performing resource reselection or resource pool reselection for an SL process associated with the first resource block set;
indicating, by a media access control MAC layer, the first resource block set to a physical layer;
excluding the first resource block set when a MAC layer or a physical layer of the terminal performs resource selection or resource reselection; and
performing resource pool reselection.

13. The method according to claim 12, wherein the performing resource pool reselection satisfies at least one of the following:
a condition for the resource pool reselection comprises that all resource block sets in the first resource pool have experienced consistent LBT failure;
a reselected resource pool comprises at least one resource block set that has not experienced consistent LBT failure;
reselection to a target resource pool is prioritized, wherein none of resource block sets contained in the target resource pool has experienced consistent LBT failure; and
resource reselection is performed based on the first resource pool in a case that all resource pools contain resource block sets that have experienced consistent LBT failure.

14. The method according to any one of claims 1 to 13, wherein in a case that the resource unit is a resource block set, the method further comprises at least one of the following:
performing, by the terminal, a fifth operation in a case that none of resource block sets in a second resource pool has experienced consistent LBT failure; and
performing, by the terminal, a sixth operation in a case that at least one resource block set in the second resource pool has experienced consistent LBT failure; wherein
the fifth operation comprises at least one of the following: determining that the resource block sets of the second resource pool are full-set resources; indicating, by the MAC layer of the terminal, the full-set resources of the second resource pool to the physical layer; indicating, by the MAC layer of the terminal, to the physical layer that a transmission mode on the second resource pool is a full-set transmission mode; indicating the full-set resources of the second resource pool to the network-side device; indicating to the network-side device that the transmission mode on the second resource pool is a full-set transmission mode; indicating the full-set resources of the second resource pool to the sidelink communication peer; and indicating to the sidelink communication peer that the transmission mode on the second resource pool is a full-set transmission mode; and
the sixth operation comprises at least one of the following: determining that the resource block sets of the second resource pool are truncated resources; indicating, by the MAC layer of the terminal, the truncated resources of the second resource pool to the physical layer; indicating, by the MAC layer of the terminal, to the physical layer that a transmission mode on the second resource pool is a truncated transmission mode; indicating the truncated resources of the second resource pool to the network-side device; indicating to the network-side device that the transmission mode on the second resource pool is a truncated transmission mode; indicating the truncated resources of the second resource pool to the sidelink communication peer; and indicating to the sidelink communication peer that the transmission mode on the second resource pool is a truncated transmission mode; wherein
the truncated resources are resource block sets that have not experienced consistent LBT failure in the second resource pool.

15. The method according to claim 14, wherein after the performing, by the terminal, a sixth operation in a case that at least one resource block set in the second resource pool has experienced consistent LBT failure, the method further comprises:
performing, by the terminal, the fifth operation or the sixth operation again in a case that a second resource block set recovers from consistent LBT failure or consistent LBT failure of the second resource block set is canceled; wherein
the second resource block set is a resource block set that has experienced consistent LBT failure in the second resource pool.

16. A sidelink listen-before-talk processing method, comprising:
sending, by a network-side device, configuration information to a terminal, wherein the configuration information comprises a first timer value and a first count value, both the first timer value and the first count value are associated with a resource unit, the resource unit comprises a resource pool or a resource block set, and the first timer value and the first count value are used for the terminal to determine whether consistent LBT failure occurs on the resource unit during a listen-before-talk process in a sidelink SL unlicensed band.

17. The method according to claim 16, wherein the resource pool comprises at least one of the following: a sidelink communication resource pool; a sidelink discovery resource pool; a sidelink dedicated resource pool; a sidelink common resource pool; a sidelink transmission resource pool; a sidelink reception resource pool; and a sidelink exceptional resource pool.

18. The method according to claim 16, wherein the resource block set comprises at least one of the following:
a resource block set for transmitting a sidelink synchronization signal and PBCH block S-SSB;
a resource block set for a physical sidelink broadcast channel PSBCH;
a resource block set for transmitting a physical sidelink shared channel PSSCH;
a resource block set for a physical sidelink control channel PSCCH;
a resource block set for transmitting a physical sidelink feedback channel PSFCH;
a resource block set for SL transmission; and
a resource block set for SL reception.

19. The method according to any one of claims 16 to 18, wherein the consistent LBT failure is used to indicate failure of at least one of the following transmissions: S-SSB, PSBCH, PSFCH, PSSCH, and PSCCH.

20. The method according to any one of claims 16 to 19, wherein in a case that the resource unit is a reception resource block set or a reception resource pool, the consistent LBT failure is an SL LBT failure for PSFCH transmission.

21. The method according to any one of claims 16 to 20, wherein after the sending, by a network-side device, configuration information to a terminal, the method further comprises:
receiving, by the network-side device, a first notification message from the terminal in a case that the terminal needs to perform a first PSFCH transmission based on a first resource unit, wherein the first notification message is used to notify that consistent LBT failure has occurred on the first resource unit, and the first resource unit is a resource unit on which consistent LBT failure occurs and the consistent LBT failure has not been canceled.

22. The method according to any one of claims 16 to 21, wherein after the sending, by a network-side device, configuration information to a terminal, the method further comprises at least one of the following:
sending, by the network-side device, first information to the terminal, wherein the first information is used to indicate reconfiguration or release of a resource pool corresponding to at least one resource pool identifier; and
sending, by the network-side device, second information to the terminal, wherein the second information is used to indicate a change in resource pool configuration or indicate an update of a system message for sidelink configuration.

23. A sidelink listen-before-talk processing apparatus, comprising:
a first receiving module configured to receive configuration information from a network-side device, wherein the configuration information comprises a first timer value and a first count value, both the first timer value and the first count value are associated with a resource unit, and the resource unit comprises a resource pool or a resource block set; and
a determining module configured to determine, based on the first timer value and the first count value during a listen-before-talk process in a sidelink SL unlicensed band, whether consistent LBT failure occurs on the resource unit.

24. A sidelink listen-before-talk processing apparatus, comprising:
a second sending module configured to send configuration information to a terminal, wherein the configuration information comprises a first timer value and a first count value, both the first timer value and the first count value are associated with a resource unit, the resource unit comprises a resource pool or a resource block set, and the first timer value and the first count value are used for the terminal to determine whether consistent LBT failure occurs on the resource unit during a listen-before-talk process in a sidelink SL unlicensed band.

25. A terminal, comprising a processor and a memory, wherein the memory stores a program or an instruction capable of running on the processor, and when the program or instruction is executed by the processor, the steps of the sidelink listen-before-talk processing method according to any one of claims 1 to 22 are implemented.

26. A network-side device, comprising a processor and a memory, wherein the memory stores a program or an instruction capable of running on the processor, and when the program or instruction is executed by the processor, the steps of the sidelink listen-before-talk processing method according to any one of claims 1 to 22 are implemented.

27. A readable storage medium, wherein the readable storage medium stores a program or an instruction, and when the program or instruction is executed by a processor, the steps of the sidelink listen-before-talk processing method according to any one of claims 1 to 22 are implemented.
